## Europäisches Patentamt

## European Patent Office

## Office européen des brevets

(19)

(11) Numéro de publication: **0 140 171**

**B1**

(12) # FASCICULE DE BREVET EUROPÉEN

(45) Date de publication du fascicule du brevet:
25.02.87

(21) Numéro de dépôt. **84111544.7**

(22) Date de dépôt: **27.09.84**

(51) Int. Cl.⁴: **F 16 L 17/02,** F 16 L 21/02

(54) Garniture d'étanchéité pour joints de tuyaux en fonte.

(30) Priorité: **28.10.83 FR 8317444**

(43) Date de publication de la demande:
**08.05.85 Bulletin 85/19**

(45) Mention de la délivrance du brevet:
**25.02.87 Bulletin 87/9**

(84) Etats contractants désignés:
**AT BE CH DE FR GB IT LI LU NL SE**

(56) Documents cité:
**EP-A-0 002 071**
**DE-A-3 136 315**
**FR-A-2 343 191**
**FR-A-2 373 745**
**FR-A-2 396 914**

(73) Titulaire: **PONT- A-MOUSSON S.A., 91, Avenue de la Libération, F-54017 Nancy (FR)**

(72) Inventeur: **Bucher, Claude, 5, rue de l'Imagerie, F-54700 Pont- A-Mousson (FR)**
Inventeur: **Lagabe, André, 20, rue de la Mairie Montauville, F-54700 Pont- A-Mousson (FR)**

(74) Mandataire: **Puit, Thierry, c/o Centre de Recherches de Pont- à- Mousson B.P. 28, F-54703 Pont- à- Mousson Cedex (FR)**

LIBER, STOCKHOLM 1987

## Description

La présente invention est relative à une garniture d'étanchéité annulaire pour joint de tuyaux en fonte à bout mâle et à emboîtement, du type à corps de compression et à talon annulaire d'ancrage -en saillie extérieure par rapport au corps- pour être logée dans une gorge d'emboîtement. Une telle garniture est destinée à être comprimée radialement entre un tuyau en fonte à bout mâle et un tuyau en fonte à emboîtement, tout en acceptant de larges écarts dimensionnels à la fois sur le diamètre interne de l'emboîtement et le diamètre externe du bout mâle.

On sait que dans ce type de garniture d'étanchéité les dimensions relatives des différentes parties constitutives du joint, c'est-à-dire de la garniture d'étanchéité, du bout mâle et de l'emboîtement sont fonctions:
- des tolérances dimensionnelles des tuyaux ;
- de la compression minimale de la garniture d'étanchéité dudit joint nécessaire pour assurer l'étanchéité, dans les conditions les plus défavorables, constituées par un diamètre interne maximum de l'emboîtement, un diamètre externe minimum du bout mâle et un fût totalement excentré à l'intérieur de l'emboîtement. A ces conditions les plus défavorables peut encore parfois s'ajouter un médiocre état de surface des tuyaux, de sorte que la garniture d'étanchéité comprimée n'est pas en contact parfait avec lesdites surfaces ;
- de la compression maximale admissible de la garniture d'étanchéité au-delà de laquelle apparait un vieillissement prématuré de l'élastomère et au-delà de laquelle l'effort d'emmanchement du bout mâle dans l'emboîtement devient excessif.

De plus, la facilité et la sûreté du montage du joint et, en particulier, la prévention d'un entraînement de la garniture par le bout mâle hors de son logement dans l'emboîtement, lors de la pénétration du bout mâle dans l'emboîtement, sont étroitement déterminées par les formes respectives de la section radiale de la garniture d'étanchéité et du profil interne de l'emboîtement.

En outre, dans le cas d'un montage du joint dans les conditions les plus défavorables décrites plus haut, l'espace annulaire entre la surface interne de l'emboîtement et la surface externe du bout mâle, peut former un jeu tel qu'une expulsion locale de la garniture d'étanchéité vers l'extérieur devienne possible sous l'effet de la ression hydraulique interne.

D'autre part, le corps de la garniture d'étanchéité, en décrochement radial par rapport au talon d'ancrage, est limité dans sa déformation axiale, à son extrémité en contact avec le liquide de la canalisation, par un épaulement interne de l'emboîtement.

Or, un tel épaulement interne est nécessaire pour empêcher l'entraînement de la garniture dans la canalisation lors de l'introduction du bout mâle, car le talon d'ancrage est insuffisant pour éviter un enfoncement de la garniture d'étanchéité dans la canalisation lors de la mise en place du bout mâle dans l'emboîtement. Ainsi, lors de la compression du corps assurant l'étanchéité, celui-ci ne peut s'allonger dans l'espace annulaire compris entre l'emboîtement et le bout mâle, ce qui augmente considérablement la force nécessaire à l'introduction du bout mâle pour une faible augmentation de son diamètre externe.

De tels problèmes montrent la difficulté de réaliser une garniture d'étanchéité élastique, pour joint de tuyaux en fonte, qui satisfasse à des conditions aussi antagonistes que l'étanchéité à une pression de service relativement élevée de l'ordre de 40 bars au moins, l'étanchéité dans les cas d'excentration extrême entre bout mâle et emboitement, un effort d'emmanchement qui ne soit pas excessif et des tolérances dimensionnelles sur le diamètre des tuyaux, sans compter les conditions de longévité de la garniture même en milieu chimiquement agressif.

On connait, par le brevet US-A-3 315 971, une garniture d'étanchéité, à compression radiale, pour tuyaux en fonte à bout mâle et emboîtement, dans laquelle le bourrelet comprimé est prolongé, du côté du fond de l'emboîtement, par une lèvre annulaire souple tendue circonférenciellement, appliquée sur la paroi cylindrique externe du bout mâle par la pression du liquide dans la canalisation, ce qui interdit toute fuite de ce liquide. Cependant, dans le cas d'un liquide sous faible pression, le liquide peut s'infiltrer entre cette lèvre souple et la paroi externe du bout mâle jusqu'à ce qu'il atteigne le bourrelet comprimé, la garniture d'étanchéité se limitant alors à un simple bourrelet à compression radiale totalement ancré dans l'emboîtement, la lèvre souple étant inefficace. Cette inutilité de la lèvre souple est d'autant plus probable que les tolérances dimensionnelles sur le diamètre du bout mâle sont plus élevées. De plus, le bourrelet d'étanchéité est exposé aussi bien au contact avec l'oxygène de l'air extérieur, si le joint est aérien, qu'au contact avec les particules solides du terrain, si le joint est enterré. Il en résulte des agressions chimiques et physiques du bourrelet d'étanchéité, susceptibles d'abréger la durée de service de la garniture d'étanchéité et de provoquer des fuites au joint.

Enfin, la tension de la lèvre la rend sensible à l'action des aromatiques des condensats de gaz naturel et l'empêche, en outre, d'assurer une bonne étanchéité avec la surface externe du bout mâle quand celle-ci présente de petits creux et bosses la lèvre tendue circonférentiellement ne pouvant remplir les creux.

D'autre part, on connaît, par le modèle d'utilité allemand DE-U-19 29 826, une bague d'entrée et de guidage du bout mâle dans l'emboîtement, du type à talon d'ancrage, pour tuyaux en chlorure de polyvinyle, ou PVC, dans laquelle une saillie, située radialement à l'opposé du talon, dirigée vers le fond de l'emboîtement et ayant une section radiale triangulaire, maintient le talon d'ancrage rectangulaire dans la gorge prévue à la surface interne de l'emboîtement pour son logement. Mais, dans les canalisations en matière plastique, telle que le PVC, il convient d'éviter que la bague n'exerce une pression trop forte à la surface externe du bout mâle au point de créer un étranglement local de ce dernier. Ainsi cette restriction limite à la fois l'étanchéité assuree par le pied triangulaire, ou saillie, et la possibilité de maintien du talon d'ancrage dans sa gorge.

Par ailleurs, le talon d'ancrage est si important qu'il présente une dimension axiale inférieure de peu à la dimension axiale totale de la bague et constitue avec la saillie opposée précitée la plus grande partie du corps de la bague. Il en résulte que, si l'on veut doter une telle bague d'un corps de compression radiale de dimensions suffisantes, la bague précitée présente alors un volume trop important, ce qui entraîne un encombrement axial inacceptable pour l'emboîtement.

En outre, les tolérances diamétrales susceptibles d'exister dans les canalisations plastiques du type PVC sont de l'ordre de quelques dixièmes de millimètres alors que pour les canalisations en fonte elles se comptent en millimètres. De plus les canalisations en chlorure de polyvinyle ont des diamètres maximaux de 400 mm Enfin dans ce type de canalisation, l'emboîtement est autant deformable que le bout mâle alors que, dans le cas des canalisations en fonte, l'emboîtement est beaucoup moins déformable que le bout mâle, la déformabilité de la fonte étant d'ailleurs sensiblement inférieure à celle du plastique précité.

Dans le brevet FR-A-2 031 925, on connaît une garniture d'étanchéité, pour tuyaux à bout mâle et emboîtement, du type à talon d'ancrage, présentant un premier lobe en saillie à la surface interne de la garniture, côté bout uni, dont la fonction est d'assurer, par une légère compression de ce lobe, la stabilité du talon d'ancrage dans sa gorge située à la face interne de l'emboîtement. Un deuxième lobe plus important, situé à l'extrémité de la bague, côté fond de l'emboîtement, assure, par sa compression, l'étanchéité du joint. Mais, dans ce type de garniture d'étanchéité, on note que ; le premier lobe en saillie n'est pas situé en vis-à-vis du talon d'ancrage et la saillie est très faible, de sorte que ces deux caractéristiques ne semblent pas de nature à assurer l'application du talon d'ancrage dans sa gorge de logement ; le talon d'ancrage, dans le sens axial, représente plus de la moitié de la bague ; le talon d'ancrage, dans le sens radial, a une saillie très importante par rapport au corps pour assurer son propre maintien au fond de sa gorge, ce à quoi le premier lobe ne semble guère contribuer. Le fond de l'emboîtement présente un épaulement qui limite la garniture dans son extension axiale lors de sa compression et augmente d'autant les forces nécessaires au montage du joint, surtout quand le bout uni est de diamètre externe maximal et l'emboîtement de diamètre interne minimal.

Dans le brevet FR-A-2 343 191, on connaît une garniture du type ayant des caractéristiques qui sont comprises dans la première partie de la revendication 1.

La Demanderesse s'est donc posé le problème de réaliser une garniture d'étanchéité pour tuyaux en fonte qui permet de tolérer des écarts dimensionnels importants de l'ordre de plusieurs millimètres sur l'espace annulaire radial entre le bout mâle et l'emboîtement, cette garniture d'étanchéité étant de type précité à corps de compression radiale et à talon d'ancrage, sans augmentation proportionnelle à ces écarts dimensionnels des dimensions de la garniture d'étanchéité et qui améliore sensiblement sa résistance à l'expulsion par le liquide sous pression dans la canalisation, tout en protégeant la partie de la garniture qui assure l'étanchéité, contre les particules solides et en évitant le contact avec l'oxygène, cette garniture d'étanchéité étant destinée aussi bien à des canalisations enterrées qu'aériennes, conduisant aussi bien des liquides chauds que froids, sous forte ou faible pression.

La présente invention a pour objet une garniture d'étanchéité qui résout ce problème pour des tuyaux en fonte, à bout mâle et emboîtement.

La garniture d'étanchéité annulaire de l'invention, pour tuyaux en fonte à bout mâle et à emboîtement, moulés en coquilles de centrifugation, du type à corps d'étanchéité par compression radiale à surface extérieure cylindrique ou tronconique divergente par rapport à la surface intérieure tronconique, à talon annulaire d'ancrage dans l'emboîtement en saillie radiale externe par rapport au corps d'étanchéité de profil méridien à peu près trapézoïdal à grande base et à petite base, la grande base correspondant au diamètre intérieur minimal de la garniture est caractérisée en ce que son talon d'ancrage, côté petite base du profil trapézoïdal du corps, est prolongé radialement vers la surface interne de la garniture par un pied annulaire de compression à profil méridien trapézoïdal en saillie radiale interne par rapport à la surface interne tronconique, ledit pied étant raccordé à la surface interne tronconique du corps par un gorge annulaire.

Grâce à l'invention, non seulement la stabilité de la garniture dans l'emboîtement est assurée, lors du montage du joint et en service, mais encore la combinaison du talon d'ancrage et du pied opposé forme une barrière efficace à l'entrée de corps étrangers et à l'entrée d'air.

En effet, il est nécessaire d'éviter les accès d'oxygène au contact de la garniture d'étanchéité, car cela entraîne une dégradation des élastomères par oxydation, ce phénomène étant d'ailleurs amplifié dans le cas des canalisations d'eau chaude où le caoutchouc se dégrade par l'extérieur. De plus, une canalisation

enterrée peut subir certains déplacements par glissement ou tassement des terrains qui l'entourent et il convient d'éviter l'introduction de particules solides au contact de la partie de la garniture assurant l'étanchéité. Enfin, la garniture d'étanchéité de l'invention doit ne présenter dans sa zone en contact avec le fluide que des surfaces en compression afin d'éviter sa détérioration par des aromatiques, par exemple.

D'autres caractéristiques et avantages ressortiront de la description qui va suivre.

Au dessin annexé, donné uniquement à titre d'exemple :

- la Fig. 1 est une coupe axiale de la garniture d'étanchéité à l'état libre suivant l'invention ;

- la Fig. 2 est une vue partielle en coupe axiale de l'emboîtement d'un tuyau dans lequel est logée la garniture d'étanchéité de l'invention avant l'introduction du bout mâle d'un autre tuyau ;

- la Fig. 3 est une vue partielle en coupe axiale analogue à la Fig.2 illustrant la première étape de l'introduction du bout mâle dans l'emboîtement muni de la garniture d'étanchéité de l'invention;,

- les Fig. 4 et 5 sont des vues partielles en coupe axiale du joint d'étanchéité avec garniture de l'invention, illustrant les écarts dimensionnels du bout mâle respectivement avec un diamètre maximal à la Fig. 4 et un diamètre minimal à la Fig. 5.

- la Fig. 6 est une coupe axiale, analogue à la Fig. 1, mais à plus petite échelle, d'une variante de la garniture d'étanchéité suivant l'invention ;

- la Fig. 7 est une coupe axiale, analogue aux Fig. 1 et 6, d'une autre variante de la garniture d'étanchéité suivant l'invention.

## DESCRIPTION:

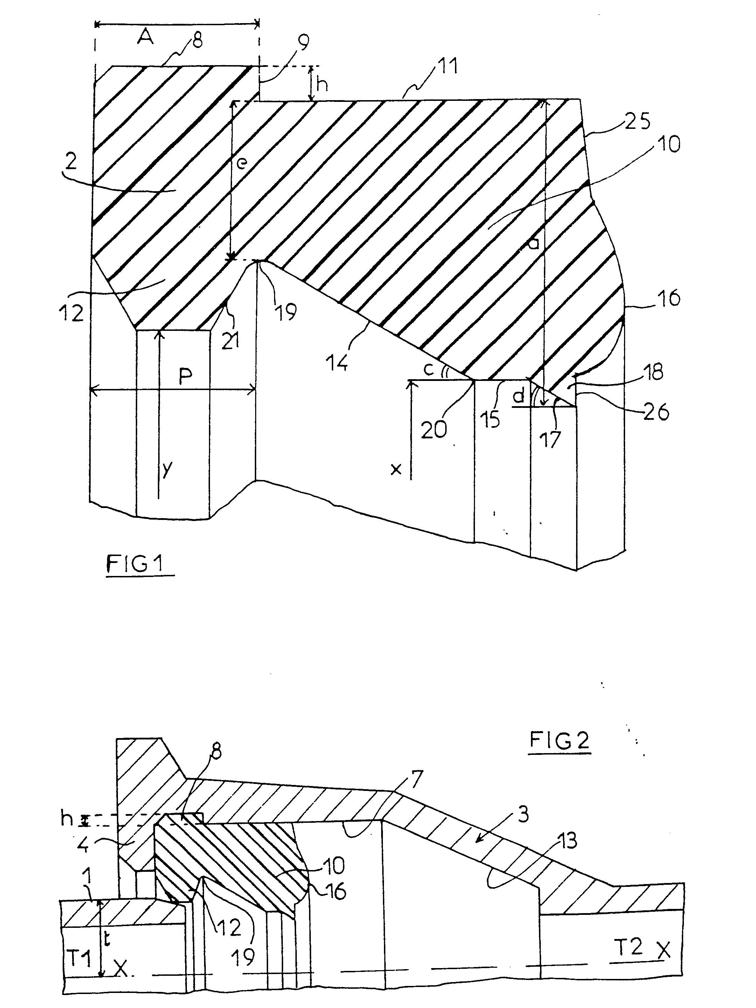

Selon l'exemple de réalisation représenté plus particulièrement aux Fig. 1 et 2, le joint d'étanchéité de l'invention est constitué d'un bout mâle 1, appartenant à un tuyau T1, d'une garniture d'étanchéité annulaire 2 et d'un emboîtement 3 d'un tuyau T2, les tuyaux T1 et T2 étant coaxiaux suivant un axe X-X. L'emboîtement 3 présente à son extrémité d'entrée, après un collet 4, une gorge cylindrique 5 coaxiale à l'emboîtement 3. Cette gorge 5 est suivie, après un décrochement formé par un épaulement 6 perpendiculaire à l'axe X-X de l'emboîtement 3, par une paroi interne cylindrique 7 de l'emboîtement 3 de diamètre inférieur au diamètre interne de la gorge 5. Le décrochement radial précité est d'une hauteur h commentée ci-après.

Suivant une structure connue, la garniture d'étanchéité 2 de l'invention, représentée plus particulièrement à la Fig. 1, en partie seulement, son axe de révolution étant hors de cette figure, présente à sa surface externe, un talon d'ancrage 8, de surface externe cylindrique et de largeur A correspondant à celles de la gorge 5, et un corps d'étanchéité 10 de surface externe 11 cylindrique d'axe X-X, auquel le talon 8 se raccorde par une joue transversale d'appui 9 qui forme un décrochement entre les surfaces périphériques du talon 8 et du corps 10. Le diamètre externe du talon d'ancrage 8 correspond au diamètre interne de la gorge 5 et le diamètre externe du corps 10 correspond au diamètre interne de la paroi 7.

Conformément à l'invention, la garniture d'étanchéité est caractérisée, à sa surface interne, par un pied annulaire 12 (protubérance annulaire 12), de section trapézoïdale, en prolongement radial interne du talon 8, c'est-à-dire en vis-à-vis du talon 8, et de diamètre interne inférieur au diamètre externe minimal du bout mâle 1, la largeur P de ce pied 12, à la grande base du profil trapézoïdal, étant égale à celle A du talon 8.

Le corps 10, de section essentiellement trapézoïdale, faisant suite au pied 12, à petite base (e) située au côté de ce pied 12 et à grande base (a) située du côté du fond de l'emboîtement 13, est caractérisé par une première surface interne 14 faisant un angle $\underline{c}$ d'environ 35° par rapport à l'axe non représenté de la garniture d'étanchéité et suivie d'une seconde surface interne 15 parallèle à l'axe de la garniture et terminée par une surface interne tronconique 17 faisant un angle d'environ 20° avec l'axe de ladite garniture. La face transversale de l'extrémité du corps 10 à l'opposé du talon 12, c'est-à-dire du côté du fond de l'emboîtement 13, est caractérisée par un lobe annulaire 16, en saillie axiale par rapport à cette face transversale et deux faces 25 et 26 constituant une partie de ladite face transversale de part et d'autre du lobe 16. La surface 26 forme avec la surface 17 une petite lèvre triangulaire 18 à profil en dent de scie. Une autre caractéristique de ce corps 10 est que l'arête 20 formée par l'intersection des surfaces 14 et 15 est d'un diamètre $\underline{x}$ inférieur au diamètre minimal du pied $\underline{y}$ 12 constitué par la petite base du profil trapézoïdal de ce pied.

De plus, la garniture d'étanchéité de l'invention est caractérisée par la présence d'une gorge triangulaire 19, située entre le pied 12 et le corps 10, limitée par le dièdre constitué par un flanc 21 du pied 12 et la surface 14 du corps 10.

L'épaisseur radiale minimale $\underline{e}$ de la garniture 2, au creux de la gorge 19, est plusieurs fois supérieure à la saillie (au décrochement) $\underline{h}$ du talon 8. On considère donc la valeur $\underline{h}$ comme relativement faible, ce qui est avantageux comme on le verra plus loin.

Enfin, le fond 13 qui termine la paroi cylindrique interne 7 de l'emboîtement 3 ménage au corps 10 de la garniture 2 un vaste logement dans le sens axial.

### Montage du joint d'étanchéité (Fig. 2, 3, 4 et 5)

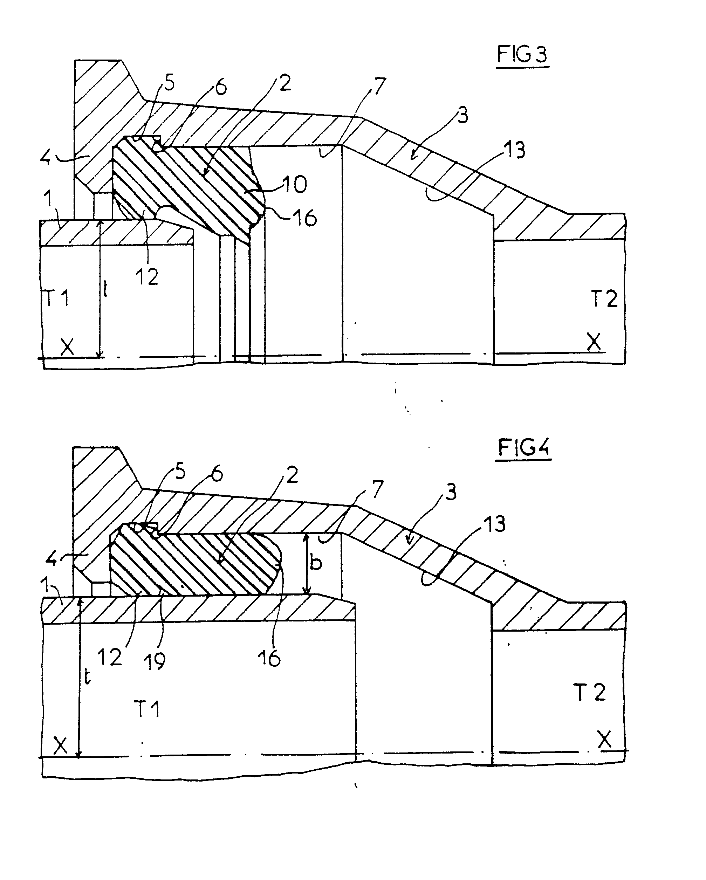

On introduit d'abord la garniture d'étanchéité 2 de l'invention dans l'emboîtement 3 du tuyau T2, après déformation élastique, son talon annulaire 8 d'ancrage étant inséré dans la gorge 5 prévue dans l'emboîtement à cet effet pour faire butée. Puis on présente le bout mâle 1 du tuyau T1 coaxialement à l'emboîtement du tuyau T2 en vue de son introduction. L'introduction du bout mâle dans cet emboîtement provoque la compression du pied 12 (Fig. 3) ce qui repousse le talon d'ancrage 8 au fond de sa gorge 5 de logement dans l'emboîtement 3, assurant ainsi la stabilité parfaite de la garniture 2 à l'intérieur de l'emboîtement 3, ce qui évite un entraînement de ce talon 8 hors de sa gorge 5 lors de la poursuite de la pénétration du bout mâle dans l'emboîtement 3, donc un entraînement de la garniture 2 vers le fond 13 de l'emboîtement, surtout si la saillie radiale h du talon 8 et la profondeur correspondante de la gorge de logement 5 sont faibles par rapport à l'épaisseur radiale minimale e du corps de la rondelle d'étanchéité, et a fortiori par rapport à son épaisseur radiale a maximale au droit de la face plane 11.

Bien entendu, pour que le pied 12 joue son rôle de barrière de protection contre des entrées de particules solides (si la conduite est enterrée) ou de barrière à l'entrée d'air (si la conduite est aérienne) son diamètre interne y, au droit de sa protubérance maximale, doit être sensiblement inférieur au diamètre externe t du bout mâle 1, même lorsque celui-ci est minimal, par suite des tolérances de fabrication.

Mais aussi et surtout, le pied 12, de par son diamètre interne y inférieur au diamètre externe t du bout mâle 1, assure la compression radiale donc l'application du talon annulaire 8 (qui lui est radialement opposé) dans sa gorge de logement 5 dans l'emboîtement 3.

La gorge 19 permet au caoutchouc excédentaire, résultant de la compression du pied 12, de trouver une place sans déformer le corps 10 de la garniture qui assure l'étanchéité.

Ensuite, la poursuite de l'introduction du bout mâle 1 dans l'emboîtement 3 permet la compression radiale du corps 10 qui peut s'allonger librement suivant la direction parallèle à l'axe compris entre la surface externe du bout mâle et la surface interne de l'emboîtement puisqu'aucun épaulement de la surface interne de l'emboîtement ne limite cette déformation. En effet, le logement 7-13 du corps 10 dans l'emboîtement 3 est suffisamment vaste dans le sens axial pour permettre un tel allongement libre. De plus, l'ancrage de la garniture d'étanchéité 2 à l'entrée de l'emboîtement 3 étant conçu pour interdire tout mouvement axial de cette garniture 2, l'allongement axial du corps 10 de la garniture d'étanchéité 2 est réalisé sans entraînement du reste de cette garniture 2 et peut varier en fonction de sa compression radiale résultant du plus ou moins grand diamètre externe t du bout mâle 1, dans les limites de tolérances de fabrication. Enfin, la lèvre 18 permet d'étanchéifier la surface externe rugueuse du bout mâle puisque, étant comprimée, elle peut pénétrer dans les creux et absorber les bosses.

La pénétration du bout mâle à travers la garniture d'étanchéité est arrêtée lorsqu'une longueur suffisante sensiblement supérieure à la longueur axiale de la garniture 2 a été introduite (Fig. 3).

Grâce à la combinaison du lobe 16, des surfaces planes 25 et 26, à l'extrémité du corps 10 côté fond de l'emboîtement 13, et de la gorge 19 côté interne de la garniture, la compression de ce corps 10 n'entraîne pas de repli interne à l'extrémité de celui-ci, résultant d'une concentration des contraintes. Grâce à cette combinaison, l'effort d'introduction du bout mâle dans l'emboîtement est réduit par rapport à la technique antérieure. C'est ainsi qu'avec une garniture d'étanchéité à lobe seul, non combiné avec une face plane d'extrémité ni avec une gorge interne, telle que décrite dans le brevet FR 1 172 962, l'effort d'introduction du bout mâle dans l'emboîtement est 1,4 fois supérieur à celui que l'on a avec la garniture de l'invention.

De plus, la surface du lobe 16 et la surface tronconique 17 ne sont soumises qu'à des contraintes de compression, ce qui augmente la longévité de la garniture.

En récapitulation, grâce à la combinaison du pied d'ancrage 12 et du talon 8 en vis à vis, d'une part, et à l'absence d'épaulement à la surface interne de l'emboîtement limitant l'extension axiale du corps 10, d'autre part, les forces de montage sont largement diminuées par rapport au joint à compression du type connu suivant le brevet FR 1 172 962.

En outre, si l'on compare avec une garniture à compression du type connu suivant le brevet FR-A-2 343 191, pour une même valeur de l'épaisseur radiale a de la garniture au droit du corps d'étanchéité 10 et une même différence de diamètre b entre le diamètre interne de l'emboîtement et le diamètre externe du bout mâle et donc une même compression de la garniture a-b/a, l'effort nécessaire à la mise en place du joint diminue de 30 %. Cela permet de faire travailler la garniture à un taux de compression voisin de 45 % sans augmenter la force de montage. Ceci permet d'atteindre des tolérances dimensionnelles de 10 mm sur le diamètre du bout mâle et interne de l'emboîtement, à comparer avec les 6 mm permis par une garniture de type connu précité. De plus, à un taux de compression égale, les contraintes dans la garniture d'étanchéité étant plus faibles de 40 %, le vieillisement est retardé, et l'absence de concentration des contraintes dans le caoutchouc permet un meilleur coulissement. Ce progrès technique est d'autant plus remarquable que la garniture de type antérieur connue par le brevet FR-A-2 343 191 apporte déjà une amélioration notable dans la diminution de l'effort d'emboîtement et l'accroissement de longévité.

La résistance à la pénétration du bout mâle ne varie pratiquement pas. Dans le joint ainsi obtenu, non seulement le corps 10 est comprimé radialement mais encore le pied 12 est également comprimé radialement et appliqué avec serrage sur le bout mâle 1. Il s'est déformé en emplissant une partie de la gorge annulaire 19 qui le sépare du corps 10. Ce pied 12 forme ainsi une barrière interposée entre le corps 10 et le milieu exterieur à l'emboîtement et au joint, milieu qui peut être l'air atmosphérique ou bien un terrain ou bien encore de l'eau d'une rivière si le joint est immergé.

Grâce à la gorge 19, la force de l'introduction du bout mâle 1 dans l'emboîtement 3, résultant de la compression de la garniture d'étanchéité 2, est considérablement réduite par rapport à celle nécessaire pour 1 introduction du même bout mâle 1 dans le même emboîtement 3 avec une garniture d'étanchéité du type connu fonctionnant à compression radiale, par exemple suivant le brevet FR-A-2 343 191, de même épaisseur que celle de l'invention.

Grâce à la combinaison du pied 12 et du talon d'ancrage 8 pour assurer la compression d'ancrage du talon 8 au fond de la gorge 5, ménagée dans l'emboîtement, lors de 1 introduction du bout mâle, il n'est plus nécessaire de prévoir un épaulement à la surface interne de l'emboîtement, pour former butée d'arrêt axial du corps d' étanchéité, en vue d'assurer la stabilité axiale de la garniture d'étanchéité dans l'emboîtement.

Grâce à la suppression de la butée à la limite du corps 10 à la surface interne de 1 emboîtement 3, ce corps 10 peut s'étendre ou s'allonger librement dans l'espace annulaire 7-13 compris entre le bout mâle 1 et l'emboîtement 3, ce qui permet d'introduire ce bout mâle avec une force qui augmente peu, si le diamètre externe du bout mâle s'accroit dans la limite des tolérances dimensionnelles, la force de montage résultant principalement de la compression du corps 10.

Grâce à la diminution de la force nécessaire au montage du joint, des écarts dimensionnels de plusieurs millimètres peuvent être tolérés entre bout mâle et emboîtement tout en conservant des propriétés d'étanchéité satisfaisantes au joint pour des pressions de service de l'ordre de 40 à 60 bars. On peut ainsi supporter des écarts dimensionnels de 8,5 mm pour un diamètre de 150 mm du bout mâle et de 11,5 mm pour un diamètre du bout mâle de 600 mm.

Grâce à la faible saillie $\underline{h}$ que permet le pied 12, il est possible d'utiliser un talon 8 dont l'épaisseur radiale, au droit de la gorge de logement du talon d'ancrage 8, peut être moins grande que pour loger un talon à saillie radiale plus importante. L'encombrement radial de l'emboîtement 3 est donc réduit.

Grâce à la combinaison du talon annulaire 8 et du pied 12 radialement opposés, toute expulsion axiale du corps 10 hors de l'emboîtement par l'action du liquide sous pression est impossible.

Grâce au pied 12 et au talon d'ancrage 8, le corps 10 assurant l'étanchéité est protégé des agressions pouvant résulter du contact avec l'oxygène, dans le cas de conduites aériennes ou des particules solides, dans le cas de conduites enterrées.

Grâce à la protection du corps 10 assurant l'étanchéité des agressions par des agents physico-chimiques, le vieillissement prématuré de l'élastomère est évité.

Grâce à l'augmentation des tolérances dimensionnelles, tant sur le diamètre interne de l'emboîtement que sur le diamètre externe du bout mâle, il est permis de réusiner les coquilles de moulage usagées servant à la fabrication par centrifugation des tuyaux, les exigences dimensionelles étant diminuées, et ainsi de prolonger la durée d'utilisation de ces coquilles.

Enfin, malgré la création du pied 12, la garniture de l'invention reste utilisable dans des emboîtements 3 de type connu, conçus pour des garnitures d'étanchéité dépourvues de pied 12.

**Variantes:**

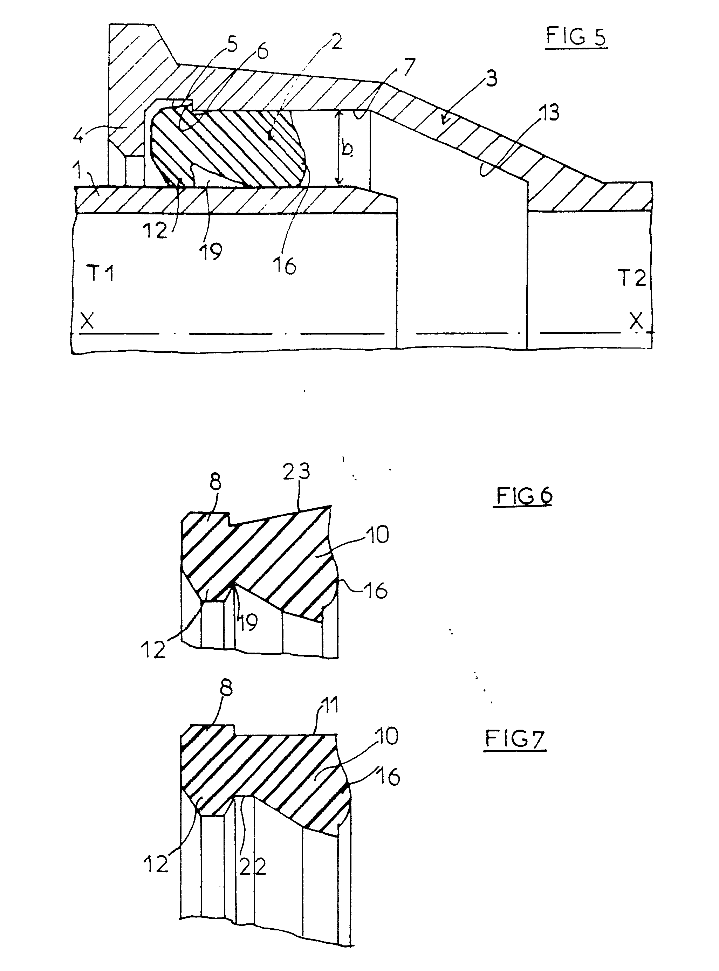

- La Fig. 6 montre une variante de l'invention adaptée au cas où l'emboîtement offre intérieurement une paroi tronconique divergente vers le fond. Le profil externe 23 du corps 10 présente alors une forme tronconique correspondante, qui diverge à partir du talon d'ancrage 8, la petite base étant du côté du talon d'ancrage 8, ce qui permet une meilleure extension axiale du corps 10 lors de la compression radiale et donc une force d'introduction constante du bout mâle 1 dans l'emboîtement 3 quel que soit le diamètre externe du bout mâle 1, dans les limites de tolérances dimensionnelles.

- La Fig. 7 montre une autre garniture d'étanchéité, variante de l'invention, où le profil de la gorge 22 est trapézoïdal, de sorte que la gorge est élargie et que la garniture est allongée, si l'on veut conserver le même corps d'étanchéité 10, ce qui augmente le poids de la garniture mais diminue la résistance à l'enfoncement.

**Revendications**

1.- Garniture d'étanchéité annulaire (2) pour tuyaux en fonte (T1 et T2) à bout mâle (1) et à emboîtement (3), moules en coquilles de centrifugation, du type à corps d'étanchéite (10) par compressior radiale à surface extérieure cylindrique (11) ou tronconique divergente (23) par rapport à la surface intérieure tronconique (14), à talon annulaire (8) d'ancrage dans l'emboîtement, en saillie radiale externe par rapport au corps d étanchéité (10) de profil méridien à peu près trapézoïdal à grande base (a) et à petite base (e), la grande base correspondant au diamètre intérieur minimal de la garniture (2), cette garniture d'étanchéité (2) étant caractérisée en ce que son talon d'ancrage (8), côté petite base du profil trapézoïdal du corps (10), est prolongé radialement vers la surface interne de la garniture (2), par un pied annulaire (12) de compression à profil méridien trapézoïdal en saillie radiale interne par rapport à la surface interne tronconique (14), ledit pied (12) etant raccordé à la surface interne tronconique (14) du corps (10) par une gorge annulaire (19).

2.- Garniture d étanchéité suivant la revendication 1 caractérisée en ce que la grande base du profil à peu près trapézoïdal du corps (10) est constituée en allant de la surface externe (11) à la surface interne (14) par une face transversale (25), un lobe (16) d'une face plane transversale (26), ledit lobe (16) étant en saillie par rapport aux faces transversales (25) et (26).

3.- Garniture d'étanchéité suivant la revendication 1 caractérisée en ce que la largeur axiale $P$ du pied (12) à la grande base de son profil trapézoïdal est égale à la largeur axiale A du talon annulaire (8).

4.- Garniture d'étanchéité suivant la revendication 1 caractérisée en ce que la hauteur $h$ de la saillie radiale du talon (8) par rapport à la surface externe (11) de la garniture (2) a une dimension contenue plusieurs fois dans celle de l'épaisseur radiale minimale $e$ de la garniture d'étanchéité, au creux de la gorge (19).

5.- Garniture d'étanchéité suivant la revendication 1 caractérisée en ce que la surface interne tronconique (14) est suivie d'une surface interne cylindrique (15) dont l'intersection avec la surface tronconique (14) est une arête circulaire (20).

6 - Garniture d'étanchéité suivant la revendication 5 caractérisée en ce que l'arête circulaire (20) a un diamètre $x$ inférieur au diamètre minimal $y$ du pied (12).

7.- Garniture d'étanchéité suivant la revendication 1 caractérisée en ce que la grande base du profil à peu près trapézoïdal du corps (10) de la garniture d'étanchéité (2) présente du côté de la surface interne (14)-(15) du corps (10) une petite lèvre triangulaire (18) à profil en dent scie formée par une surface interne tronconique (17) adjacente à la surface interne (15), et par la face plane transversale (26).

8.- Garniture d'étanchéité suivant la revendication 1 pour joint d'étanchéité entre le bout mâle (1) d'un tuyau T1 en fonte et l'emboîtement (3) d'un tuyau T2 en fonte, caractérisée en ce que, en service, le talon (8) est appliqué au fond de la gorge correspondante (5) de l'emboîtement (3) par le pied (12) qui est comprimé radialement contre le bout mâle (1) du tuyau T1 tandis que le corps (10) est comprimé radialement entre le bout mâle (1) du tuyau T1 et l'emboîtement (3) du tuyau T2, ledit pied (12) emplissant une partie de la gorge annulaire (19)

qui le sépare du corps (10).

**Patentansprüche**

1. Ringförmige Dichtung (2) für gußeiserne Rohre (T1 und T2) mit einem Steck- (1) und einem Buchsenende (3), wobei das Rohr in einer Schleudergußkokille gegossen ist und die Dichtung einen Dichtkörper (10) aufweist, der mittels radialem Andruck an die äußere zylinderförmige (11) oder sich im Verhältnis zur inneren kegelstumpfförmigen Fläche (14) keglig aufweitende äußere Oberfläche (23) abdichtet, und wobei der Dichtkörper im Schäftbereich einen ringförmigen Verankerungsvorsprung aufweist, der bezüglich des Dichtkörpers (10) radial nach außen vorspringt und wobei der Dichtkörper ein im wesentlichen trapezförmiges Meridianprofil mit einer großen (a) und einer kleinen (e) Basis hat, wobei die große Basis dem kleinsten Innendurchmesser der Dichtung (2) entspricht, dadurch gekennzeichnet, daß der Verankerungsvorsprung (8) auf der Seite der kleinen Basis des trapezförmigen Profils des Dichtkörpers (10) radial zur Innenseite der Dichtung (2) mittels eines ringförmigen Drucksockels (12) verlängert ist, der ein trapezförmiges Meridianprofil aufweist, das radial nach innen im Verhältnis zur kegelstumpfförmigen Innenfläche (14) vorsteht, wobei der Sockel (12) über eine ringförmige Nut (19) mit der inneren kegelstumpfförmigen Seite (14) des Dichtkörpers (10) verbunden ist.

2. Dichtung nach Anspruch 1, dadurch gekennzeichnet, daß die große Basis des im wesentlichen trapezförmigen Profils des Körpers (10) von der Außenseite (11) zur Innenseite (14) gehend besteht aus einer transversalen Fläche (25), einer Ausbuchtung (16) mit einer planen transversalen Fläche (26), wobei die Ausbuchtung (16) im Verhältnis zu den transversalen Flächen (25 und 26) vorsteht.

3. Dichtung nach Anspruch 1, dadurch gekennzeichnet, daß die axiale Breite (P) des Sockels (12) mit der großen Basis des trapezförmigen Profils gleich der axialen Breite A des ringförmigen Vorsprungs (8) ist.

4. Dichtung nach Anspruch 1, dadurch gekennzeichnet, daß die Höhe h des radialen Vorstehens des Vorsprungs (8) im Verhältnis zur Außenfläche (11) der Dichtung (2) größenordnungsmäßig ein Vielfaches der minimalen radialen Dicke e der Dichtung auf dem Grund der Nut (19) ist.

5. Dichtung nach Anspruch 1, dadurch gekennzeichnet, daß die kegelstumpfförmige Innenfläche (14) von einer zylinderförmigen Innenfläche (15) gefolgt wird, deren Schnittkante mit der kegelstumpfförmigen Fläche (14) eine kreisförmige Kante (20) ist.

6. Dichtung nach Anspruch 5, dadurch gekennzeichnet, daß die kreisförmige Kante (20) einen Durchmesser x hat, der kleiner als der minimale Durchmesser y des Sockels (12) ist.

7. Dichtung nach Anspruch 1, dadurch gekennzeichnet, daß die große Basis des im wesentlichen trapezförmigen Profils des Körpers (10) der Dichtung (2) auf der Seite der Innenfläche (14 bis 15) des Körpers (10) eine kleine dreieckige Zunge (18) mit sägezahnförmigem Profil aufweist, die aus einer kegelstumpfförmigen Innenfläche (17), die an die Innenflächen (15) angrenzt und aus einer ebenen transversalen Fläche (26) gebildet wird.

8. Dichtung nach Anspruch 1 zur Verbindung eines Einsteckendes (1) eines gußeisernen Rohres T1 und der Schäftung (3) eines gußeisernen Rohres T2, dadurch gekennzeichnet, daß während des Dichtens der Vorsprung (8) auf dem Boden der entsprechenden Nut (5) der Schäftung (3) anliegt, mittels eines Sockels (12), der radial gegen das Steckende (1) des Rohrs T1 gedrückt ist, während der Körper (10) radial zwischen dem Steckende (1) des Rohrs T1 und der Schäftung (3) des Rohrs T2 komprimiert ist, wobei der Sockel (12) einen Teil der ringförmigen Nut (19), die den Körper (10) trennt, füllt.

## Claims

1. Annular packing (2) for cast-iron pipes (T1 & T2) comprising a male end (1) and a socket (3), cast in centrifugal chill moulds of the type comprising a sealing body (10) acting by radial compression, with an outer surface which is cylindrical (11) or frustoconical and diverging (23) with respect to the inner frustoconical surface (14), comprising an annular heel (8) for anchoring in the socket, projecting radially outwards with respect to the sealing body (10) of roughly trapezoidal meridian profile having a major base (a) and a minor base (e), the major base corresponding to the minimum inner diameter of the packing (2), this packing (2) being characterised in that its anchoring heel (8), adjacent the minor base of the trapezoidal profile of the body (10), is extended radially towards the inner surface of the packing (2), by an annular compression foot (12) having a trapezoidal meridian profile projecting radially inwards with respect to the inner frustoconical surface (14), the said foot (12) being connected to the inner frustoconical surface (14) of the body (10) by an annular groove (19).

2. Packing according to Claim 1, characterised in that the major base of the roughly trapezoidal profile of the body (10) is constituted starting from the outer surface (11) to the inner surface (14) by a transverse face (25), a lobe (16) of a flat transverse face (26), the said lobe (16) projecting with respect to the transverse faces (25 and 26).

3. Packing according to Claim 1, characterised in that the axial width ($\underline{P}$) of the foot (12) at the major base of its trapezoidal profile is equal to the axial width (A) of the annular heel (8).

4. Packing according to Claim 1, characterised in that the height ($\underline{h}$) of the radial projection of the heel (8) with respect to the outer surface (11) of the packing (2) has a dimension contained several times in that of the minimal radial thickness ($\underline{e}$) of the packing, in the hollow of the groove (19).

5. Packing according to Claim 1, characterised in that the inner frustoconical surface (14) is followed by an inner cylindrical surface (15) whereof the intersection with the frustoconical surface (14) is a circular edge (20).

6. Packing according to Claim 5, characterised in that the circular edge (20) has a diameter ($\underline{x}$) less than the minimum diameter ($\underline{y}$) of the foot (12).

7. Packing according to Claim 1, characterised in that the major base of the roughly trapezoidal profile of the body (10) of the packing (2) comprises adjacent the inner surface (14-15) of the body (10) a small triangular lip (18) of sawtooth profile, formed by an inner frustoconical surface (17) adjacent the inner surface (15) and by the flat transverse face (26).

8. Packing according to Claim 1 for a gasket between the male end (1) of a cast-iron pipe (TI) and the socket (3) of a cast-iron pipe (T2), characterised in that, in operation, the heel (8) is pressed at the bottom of the corresponding groove (5) in the socket (3) by the foot (12) which is compressed radially against the male end (1) of the pipe (TI), whereas the body (10) is compressed radially between the male end (1) of the pipe (T1) and the socket (3) of the pipe (T2), the said foot (12) filling part of the annular groove (19) which separates it from the body (10).

FIG 1

FIG 2

FIG 3

FIG 4

FIG 5

FIG 6

FIG 7